# EUROPÄISCHE PATENTSCHRIFT

(11) **EP 0 848 904 B1**
(45) Veröffentlichungstag und Bekanntmachung des Hinweises auf die Patenterteilung: **29.08.2001**
(21) Anmeldenummer: 97122371.4
(22) Anmeldetag: 18.12.1997
(51) Int. Cl.: A01G 13/02, A01D 31/00, A01C 1/04, A01D 33/14

(54) **Verfahren zum Aufnehmen von mit Erde bedeckten langgestreckten Pflanznetzen und Pflanznetz**
Method for removing soil-covered sheeting and plant net
Méthode pour ramasser des filets recouverts de terre et filet de plantation

(30) Priorität: 21.12.1996 DE 19653987
(43) Veröffentlichungstag der Anmeldung: 24.06.1998
(73) Patentinhaber: JÜNEMANN, Ulrich, D-34119 Kassel (DE)
(72) Erfinder: JÜNEMANN, Ulrich, D-34119 Kassel (DE)
(74) Vertreter: Patentanwälte Rehberg + Hüppe

(56) Entgegenhaltungen:
- EP-A- 0 206 848
- EP-A- 0 423 355
- EP-A- 0 515 289
- DE-C- 4 306 834
- FR-A- 2 592 007

## Beschreibung

Die Erfindung bezieht sich auf ein Verfahren zum Aufnehmen von mit Erde bedeckten, langgestreckten Pflanznetzen, wobei die Pflanznetze mit einem Rodegerät aufgenommen und aus der Erde ausgehoben werden, sowie auf ein Pflanznetz zum Bedecken mit Erde und zum Wiederaufnehmen nach einem solchen Verfahren.

Pflanznetze werden zusammen mit einem Pflanzgut, beispielsweise Blumenzwiebeln, in den Boden eingebracht und mit Erde bedeckt. Zum Ernten der vermehrten Blumenzwiebeln wird das Pflanznetz nach der Vegetationsperiode mit den Blumenzwiebeln wieder aufgenommen. Dabei erleichtert das Pflanznetz sowohl die Aufnahme der Blumenzwiebeln als auch die Trennung der Blumenzwiebeln von der umgebenden Erde.

Die Verwendung von schlauchförmigen Pflanznetzen ist beispielsweise in dem DE-GM 74 04 524 beschrieben.

Ein schlauchförmiges Pflanznetz geht auch aus der EP 0607 488 A1 hervor.

Neben schlauchförmigen Pflanznetze, die das Pflanzgut ringförmig umgeben, sind auch Anordnungen bekannt, bei denen ein erstes Pflanznetz unter dem Saatgut und ein weiteres Pflanznetz über dem Saatgut angeordnet wird. Die Erfindung bezieht sich auf beide Anwendungsformen von Pflanznetzen.

Das von der Erfindung zu lösende Problem besteht darin, das Rodegerät, mit dem die Pflanznetze aufgenommen werden, relativ zu den mit Erde gedeckten Pflanznetzen auszurichten.

Die genaue Lage der Pflanznetze in der Erde ist nach einer Vegetationsperiode nicht ohne weiteres ersichtlich. Es ist jedoch wichtig, das Rodegerät relativ zu den mit Erde bedeckten Pflanznetzen exakt auszurichten, damit diese Pflanznetze über ihre gesamte Breite gleichmäßig erfaßt werden. Nur so können Störungen beim Erntevorgang und Beschädigungen der Pflanznetze vermieden werden. Beschädigungen der Pflanznetze beinhalten die Gefahr des Verlierens von Erntegut, und sie schließen schnell eine Wiederverwertung der Pflanznetze in der nächsten Saison aus.

Es sind Netze zur überirdischen Abdeckung von Pflanzen bekannt, die metallisierte Fäden oder Bänder aufweisen, um die Lichtreflektion durch die Netze und damit den Schutz der abgedeckten Pflanzen vor übermäßiger Sonneneinstrahlung zu erhöhen.

Weiterhin ist aus der DE 33 41 662 A1 ein Folienband mit eingeschweißtem Eisendraht bekannt, mit dem zuvor auf dem Folienband angezogene Pflanzen einer Pflanzscheibe zugeführt werden.

Bei einem Verfahren der eingangs beschriebenen Art wird die Aufgabe der Erfindung dadurch gelöst, daß das Rodegerät in Abhängigkeit von dem Signal mindestens einer Metallsonde relativ zu den mit Erde bedeckten Pflanznetzen ausgerichtet wird, wobei jede Metallsonde auf einen Metallanteil der Pflanznetze anspricht. Mit der Metallsonde ist es möglich, das Rodegerät relativ zu den mit Erde bedeckten und damit unsichtbaren Pflanznetzen exakt auszurichten. Die Metallsonde spricht auf einen Metallanteil der Pflanznetze an. Um das dabei gewonnene Signal in möglichst großer Intensität zu erhalten, ist die Metallsonde nahe dem Boden, in dem sich die Pflanznetze befinden, zu führen. Weiter ist es von Vorteil, wenn die Sonde dort über den Boden geführt wird, wo ein Räumer bereits überirdische Pflanzenreste und einen Teil der die Pflanznetze bedeckenden Erde entfernt hat. Hierdurch wird die Schwächung des Signals der Metallsonde durch die bereits entfernte Erdschicht verhindert.

Bei dem neuen Verfahren kann die Metallsonde auf die magnetischen und/oder elektrischen Eigenschaften des Metallanteils ansprechen. Ein Ansprechen auf die magnetischen Eigenschaften des Metallanteils bietet sich insbesondere bei ferromagnetischen Metallanteilen an. Ein elektromagnetisches Wechselfeld wird aber auch von nicht-ferromagnetischen Metallanteilen aufgrund ihrer elektrischen Eigenschaften in einer solchen Weise beeinflußt, die für eine Registrierung durch die Metallsonde ausreichend ist.

In einer Ausführungsform des neuen Verfahrens spricht jede Metallsonde auf von dem Metallanteil, der dabei elektrisch leitend und in der Haupterstreckungsrichtung des Netzes durchgehend sein muß, abgestrahlte elektromagnetische Wellen an. Bei den elektromagnetischen Wellen handelt es sich vorzugsweise um durch Hintergrundstrahlung aus der Umgebung angeregte Langwellen. Ein entsprechendes Verfahren zum Auffinden von Drähten ist grundsätzlich bekannt.

Die Metallsonde kann aber auch auf die ultraschall-reflektierenden Eigenschaften des Metallanteils ansprechen. Die ultraschallreflektierenden Eigenschaften des Metallanteils werden von den Dichteschwankungen an den Grenzflächen des Metallanteils bestimmt.

Das neue Verfahren ist grundsätzlich auch mit Pflanznetzen durchführbar, die den bekannten, einen Metallanteil aufweisenden Netzen entsprechen, welche bislang ausschließlich zum überirdischen Einsatz verwendet wurden. Ein erfindungsgemäßes Pflanznetz zur Verwendung bei dem neuen Verfahren weist jedoch einen Metallanteil auf, der in einem oder mehreren Teilbereichen des Pflanznetzes konzentriert ist, wobei sich jeder Teilbereich, in dem der Metallanteil konzentriert ist, parallel zu der Haupterstreckungsrichtung des Pflanznetzes erstreckt und quer zu der Haupterstreckungsrichtung des Pflanznetzes eine im Vergleich zu dem Pflanznetz geringe Breite aufweist. Durch diese Konzentration wird die Ausrichtung des Rodegeräts gegenüber dem Pflanznetz erleichtert, weil das Signal der Metallsonde bei seitlichen Verschiebungen der Metallsonde beziehungsweise des Rodegeräts zu dem Pflanznetz stärker abfällt.

Dabei kann ein einziger Teilbereich um die Längsmittelebene des Pflanznetzes herum angeordnet sein. Alternativ oder zusätzlich ist es möglich, an einem oder beiden seitlichen Rändern des Pflanznetzes jeweils einen Teilbereich vorzusehen, in dem der Metallanteil des Pflanznetzes konzentriert ist. Es versteht sich, daß die Anordnung der Metallsonde beziehungsweise der Metallsonden relativ zu dem Rodegerät auf die Anordnung der Teilbereiche, in denen der Metallanteil des Pflanznetzes konzentriert ist, abgestimmt werden muß.

Der Metallanteil des Pflanznetzes kann in Form mindestens eines dünnen Metallfadens oder eines Metallfadens oder eines metallisierten Bands oder Fadens vorgesehen sein. Mit Metalldrähten und -fäden kann relativ viel Metallmasse konzentriert in das Pflanznetz eingebracht werden. Metallisierte Bänder und Fäden, die für andere Anwendungen handelsüblich sind, weisen ein metallisiertes Substrat beispielsweise auf Polyesterbasis auf und besitzen eine für eine Verwendung in einem Pflanznetz vorteilhafte Dehnfähigkeit.

Dabei kann jeder Metalldraht, jeder Metallfaden, jedes metallisierte Band bzw. jeder metallisierte Faden ein tragendes Band bzw. einen tragenden Faden des Pflanznetzes ersetzen. Es ist aber auch möglich, aus Sicherheitsgründen jeden Metalldraht, jeden Metallfaden, jedes metallisierte Band beziehungsweise jeden metallisierten Faden zusätzlich zu den tragenden Bändern oder Fäden des Pflanznetzes vorzusehen. Unabhängig davon, ob die Metallfäden, metallisierten Bänder und metallisierten Fäden alternativ oder zusätzlich vorgesehen sind, können sie bei der Herstellung des Pflanznetzen in das Pflanznetz eingearbeitet werden.

In der bevorzugten Ausführungsform ist jeder Metalldraht, jeder Metallfaden, jedes metallisierte Band beziehungsweise jeder metallisierte Faden als Schußfaden oder parallel zu einem Schußfaden in das Pflanznetz eingewirkt. Grundsätzlich kann jeder Metallfaden, jedes metallisierte Band beziehungsweise jeder metallisierte Faden auch als Fransenfaden oder parallel zu einem Fransenfaden in das Pflanznetz eingewirkt sein. Die Fransenfäden in einem Pflanznetz weisen jedoch deutlich kleinere Schlingungsradien auf, was bei Metallfäden, metallisierten Bändern beziehungsweise metallisierten Fäden zu Problemen beim, Wirkvorgang führen kann.

Durch zusätzliche Metallmarkierungen von Pflanznetzen können der Steuerung eines Rodegeräts neben der Lage der Pflanznetze weitergehende Informationen vermittelt werden, beispielsweise daß sie sich an das Ende einer Pflanzreihe auf eine bestimmte Entfernung angenähert hat. Die entsprechenden Markierungen können jedoch sinnvollerweise erst beim Ausbringen der Pflanznetze, d.h. beim Pflanzen, angebracht werden.

Die Erfindung wird im folgenden anhand von Ausführungsbeispielen näher erläutert und beschrieben. Dabei zeigt
- Figur 1: die schematische Anordnung von mit Erde bedeckten Pflanznetzen im Boden in einem Querschnitt,
- Figur 2: die Anordnung gemäß Figur 1 in einer Draufsicht auf den Boden,
- Figur 3: eine Vorrichtung zum Aufnehmen von mit Erde bedeckten Pflanznetzen,
- Figur 4: ein schematisiertes Pflanznetz in der Draufsicht und
- Figur 5: ein Detail eines Pflanznetzes.

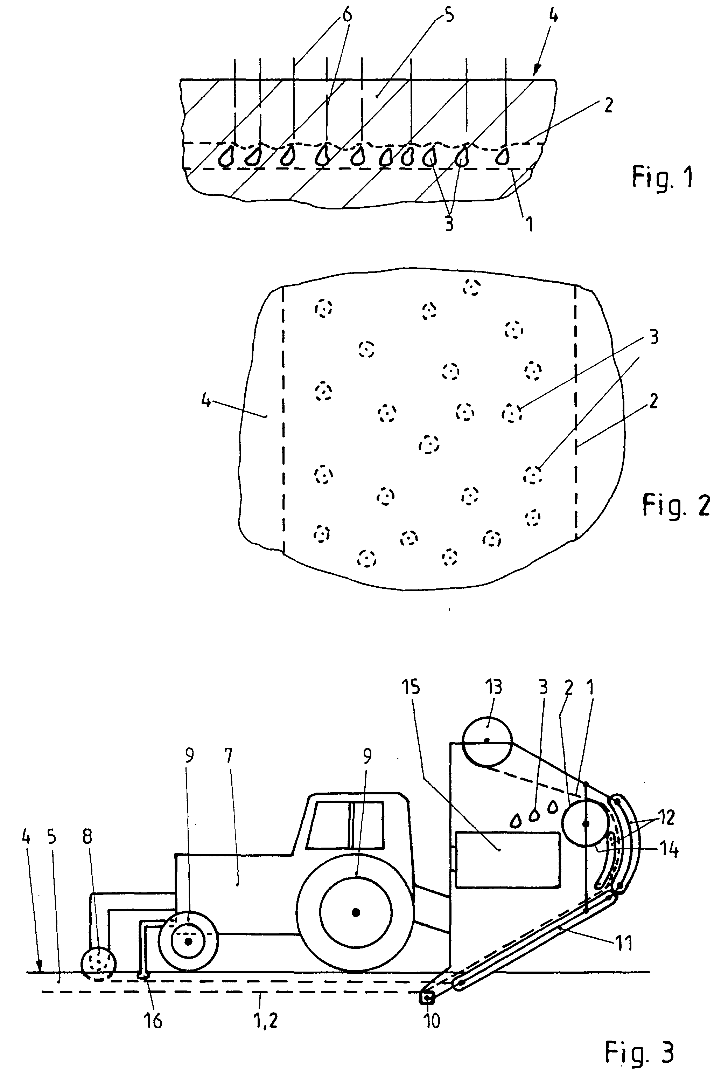

Beim Anbau von unterirdisch wachsenden Pflanzen unter Verwendung von Pflanznetzen befindet sich das Erntegut nach der Vegetationsperiode zwischen den Pflanznetzen, die mit Erde bedeckt sind, im Boden. Diese Situation ist in den Figuren 1 und 2 dargestellt. Hier und in den weiteren Ausführungsbeispielen wird auf eine Anordnung Bezug genommen, in der ein unteres Pflanznetz 1 und ein oberes Pflanznetz 2 das Erntegut umgeben, bei dem es sich um Blumenzwiebeln 3 handeln möge. Für die Erfindung ist es aber unerheblich, ob statt der beiden getrennten Pflanznetze 1 und 2 beispielsweise ein schlauchförmiges Pflanznetz zur Anwendung kommt. Die im Boden befindlichen Pflanznetze 1 und 2 sind mit Erde 5 abgedeckt. Durch die Erde 5 erstrecken sich von den Blumenzwiebeln 3 Pflanzenreste 6 nach oben, die vor der Ernte bereits vertrocknet oder zumindest verwelkt sind.

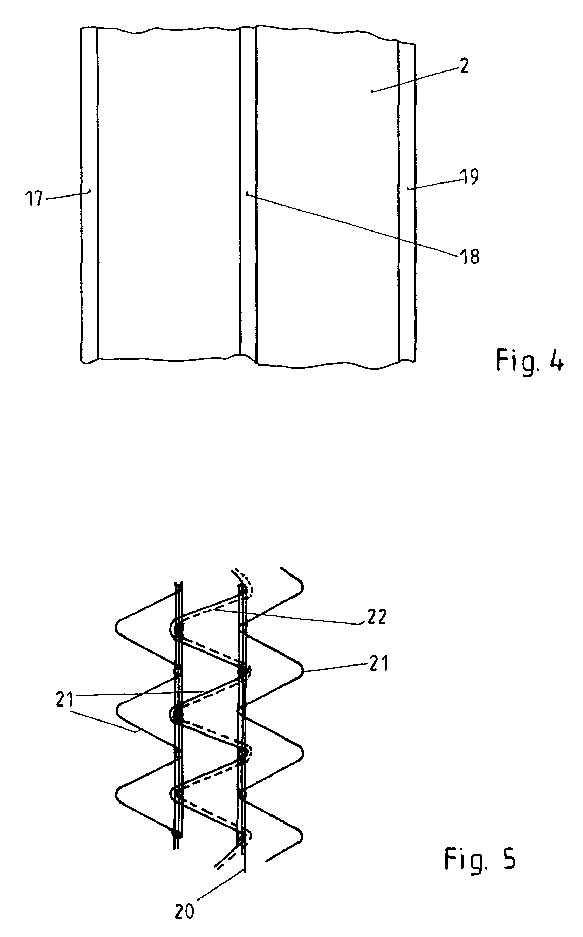

Figur 3 zeigt ein Rodegerät 7 bis 15 zum Aufnehmen der Pflanznetze 1 und 2 mit den Blumenzwiebeln 3 aus dem Boden 4. Die einzelnen Bestandteile des Rodegeräts 7 bis 15 sind an einen Traktor 7 angebaut. In Arbeitsrichtung ist zunächst ist ein Räumer 8 vorgesehen, der die die Pflanznetze 1, 2 abdeckende Erde bis auf etwa 5 cm Dicke entfernt. Die Räder des Traktors 9 bewegen sich außerhalb des von dem Räumer 8 erfaßten Bereichs. Innerhalb dieses Bereichs untergreift eine Ablösewalze 10 die Pflanznetze 1, 2, die anschließend mit Förderbändern 11 und 12 angehoben und dann zum Freigeben der Blumenzwiebeln 3 getrennt auf Rollen 13 und 14 aufgewickelt werden. Die freigegebenen Blumenzwiebeln fallen in einen Aufnahmebehälter 15. Gerade weil die Räder 9 des Traktors 7 außerhalb des Bearbeitungsbereichs des Rodegeräts 7 bis 15 über den Boden 4 rollen, ist es wichtig, das Rodegerät 7 bis 15 relativ zu den Pflanznetzen 1, 2 exakt auszurichten. Hierzu ist hinter dem Räumer 8 mindestens eine Metallsonde 16 vorgesehen. Die Metallsonde 16 spricht auf einen Metallanteil an, der in dem oberen Pflanznetz 2 vorgesehen ist, welches stark schematisiert in Figur 4 wiedergegeben ist.

Der Metallanteil des Pflanznetzes 2 ist in Teilbereichen 17 bis 19 konzentriert. Es ist nicht notwendig, daß alle drei Teilbereiche 17 bis 19 mit konzentriertem Metallanteil bei dem Pflanznetz 2 vorgesehen sind. Es reicht beispielsweise aus, wenn der Teilbereich 18, welcher um die Längsmittelebene des Pflanznetzes 2 herum angeordnet ist, vorliegt. Der Teilbereich 18 ist besonders in Verbindung mit nur einer einzigen Metallsonde 16 geeignet. Wenn zwei Metallsonden vorgesehen sind, empfehlen sich die Teilbereiche 17 und 19 in den Randbereichen des Pflanznetzes 2. Alle drei Teilbereiche 17 bis 19 sind nur in Verbindung mit 3 Metallsonden sinnvoll, wobei jede Metallsonde im Idealfall jeweils genau über einem der Teilbereiche 17 bis 19 angeordnet ist, wenn das Rodegerät 7 bis 15 mit dem Räumer 8 und der Ablösewalze 10 korrekt gegenüber den Pflanznetzen 1, 2 ausgerichtet ist.

Der Metallanteil des Pflanznetzes 2 besteht aus Metallfäden oder metallisierten Fäden oder Bändern, die zusätzlich zu den tragenden Fäden/Bändern des Pflanznetzes 2 in das Pflanznetz 2 eingewirkt sind. Dies ist in Figur 5 angedeutet, die zwei nebeneinanderliegende Fransenfäden 20 und die damit verbundenen Schußfäden 21 im Detail zeigt. Einem der Schußfäden 21 ist ein gestrichelt dargestelltes metallisiertes Band 22 zugeordnet. Das heißt, das metallisierte Band 22 ist parallel zu diesem Schußfaden 21 in das in Figur 5 dargestellte Gewebe eingewirkt.

Das Signal der Metallsonden 16 hängt naturgemäß von der Metallmasse des Metallanteils des Pflanznetzes 2 in den Teilbereichen 17 bis 19 ab. Diese Metallmasse kann durch die Anzahl der eingewirkten metallisierten Fäden/Bänder und deren Stärke beziehungsweise Belegung mit Metall beeinflußt werden. Eine grundsätzlich größere Metallmasse ist bei Verwendung von reinen Metallfäden oder von Fäden mit einer Metallseele vorhanden. Weiterhin ist eine Abstimmung des einzelnen Metalls auf die Art der verwendeten Metallsonde sinnvoll. Eine magnetische Metallsonde spricht beispielsweise besonders gut auf ein ferromagnetisches Metall an.

Die Teilbereiche 17 bis 19, in denen der Metallanteil des Pflanznetzes 2 konzentriert ist, haben eine Leitfunktion für das Rodegerät 7 bis 15 zum Aufnehmen des Pflanznetzes, die auch bei Abdeckung des Pflanznetzes 2 mit Erde wirksam ist. Durch eine exaktere Ausrichtung des Rodegeräts gegenüber den Pflanznetzen kann der notwendige seitliche Abstand zwischen zwei benachbarten Pflanzreihen reduziert und damit der genutzte Flächenanteil erhöht werden. Mit einem Traktor 7 gegebener Spurbreite können darüberhinaus breitere Pflanznetze als bisher zuverlässig und störungsfrei aufgenommen werden, ohne daß eine Gefahr von Beschädigungen der Pflanznetze besteht.

### BEZUGSZEICHENLISTE

- 1 -: Pflanznetz
- 2 -: Pflanznetz
- 3 -: Blumenzwiebel
- 4 -: Boden
- 5 -: Erde
- 6 -: Pflanzenrest
- 7 -: Traktor
- 8 -: Räumer
- 9 -: Rad
- 10 -: Ablösewalze

- 11 -: Förderband
- 12 -: Förderband
- 13 -: Rolle
- 14 -: Rolle
- 15 -: Behälter
- 16 -: Metallsonde
- 17 -: Teilbereich
- 18 -: Teilbereich
- 19 -: Teilbereich
- 20 -: Fransenfaden

- 21 -: Schußfaden
- 22 -: metallisierter Faden

## Patentansprüche

1. Verfahren zum Aufnehmen von mit Erde bedeckten langgestreckten Pflanznetzen, wobei die Pflanznetze mit einem Rodegerät aufgenommen und aus der Erde ausgehoben werden, **dadurch gekennzeichnet,** daß das Rodegerät (7 bis 15) in Abhängigkeit von dem Signal mindestens einer Metallsonde (16) relativ zu den mit Erde bedeckten Pflanznetzen (1, 2) ausgerichtet wird, wobei jede Metallsonde (16) auf einen Metallanteil der Pflanznetze anspricht.

2. Verfahren nach Anspruch 1, **dadurch gekennzeichnet,** daß jede Metallsonde (16) auf die magnetischen und/oder elektrischen Eigenschaften des Metallanteils anspricht.

3. Verfahren nach Anspruch 2, **dadurch gekennzeichnet,** daß jede Metallsonde (6) auf die von dem Metallanteil abgestrahlten elektromagnetischen Wellen anspricht.

4. Verfahren nach Anspruch 1, 2 oder 3, **dadurch gekennzeich**net, daß jede Metallsonde (16) auf die Ultraschallreflektierenden Eigenschaften des Metallanteils anspricht.

5. Pflanznetz zum Bedecken mit Erde und zum Wiederaufnehmen nach einem Verfahren nach einem der Ansprüche 1 bis 4, **dadurch gekennzeichnet,** daß das Pflanznetz einen Metallanteil aufweist, der in einem oder mehreren Teilbereichen (17 bis 19) des Pflanznetzes (2) konzentriert ist, wobei sich jeder Teilbereich (17 bis 19), in dem der Metallanteil konzentriert ist, parallel zu der Haupterstreckungsrichtung des Pflanznetzes (2) erstreckt und quer zu der Haupterstreckungsrichtung des Pflanznetzes eine im Vergleich zu dem Pflanznetz geringe Breite aufweist.

6. Pflanznetz nach Anspruch 5, **dadurch gekennzeichnet**, daß ein Teilbereich (18) um die Längsmittelebene des Pflanznetzes (2) herum angeordnet ist.

7. Pflanznetz nach Anspruch 5 oder 6, **dadurch gekennzeichnet**, daß ein Teilbereich (17, 19) an einem seitlichen Rand des Pflanznetzes (2) angeordnet ist.

8. Pflanznetz nach einem der Ansprüche 5 bis 7, **dadurch gekennzeichnet,** daß der Metallanteil des Pflanznetzes (2) in Form von mindestens einem Metalldraht oder einem Metallfaden oder metallisierten Band oder Faden (22) vorgesehen ist.

9. Pflanznetz nach Anspruch 8, **dadurch gekennzeichnet,** daß jeder Metalldraht, jeder Metallfaden, jedes metallisierte Band bzw. jeder metallisierter Faden (22) zusätzlich zu den tragenden Bändern oder Fäden (20, 21) des Pflanznetzes (2) vorgesehen ist.

10. Pflanznetz nach Anspruch 8 oder 9, **dadurch gekennzeichnet,** daß jeder Metalldraht, jeder Metallfaden, jedes metallisierte Band bzw. jeder metallisierte Faden (22) als Schußfaden oder parallel zu einem Schußfaden (21) in das Pflanznetz (2) eingewirkt ist.

## Claims

1. A method for lifting up elongated plant nets covered with soil, the plant nets being engaged by a lifting device and being lifted up out of the soil, **characterized in that** the lifting device (7 to 15) is aligned with regard to the plant nets (1, 2) covered with soil in response to a signal of at least one metal detector (16), each metal dectector (16) reacting to a metal portion of the plant nets.

2. The method of claim 1, **characterized in that** each metal detector (16) reacts to the magnetic and/or electrical properties of the metal protion.

3. The method of claim 2, **characterized in that** each metal detector (6) reacts to the electromagnetic waves emitted by the metal protion.

4. The method of claim 1, 2 or 3, **characterized in that** each metal detector (16) reponds to the ultrasound-reflecting properties of the metal protion.

5. A plant net to be covered with soil and to be lifted up again according to the method of any of the claims 1 to 4, **characterized in that** the plant net comprises a metal portion which is concentrated in one or several parts (17 to 19) of the plant net (2), each part (17 to 19) in which the metal portion is concentrated extending in parallel to the direction of main extension of the plant net and having a narrow width transverse to the direction of main extension of the plant net as compared to the plant net itself.

6. The plant net of claim 5, **characterized in that** one (18) of the parts is arranged around the longitudinal center plane of the plant net (2).

7. The plant net of claim 5 or 6, **characterized in that** one (17, 19) of the parts is arranged at the lateral edge of the plant net (2).

8. The plant net of any of the claims 5 to 7, **characterized in that** the metal protion of the plant net (2) is provided in form of at least one metal wire or one metal thread or one metallized ribbon or thread (22).

9. The plant net of claim 8, **characterized in that** each metal wire, each metal thread, each metallized ribbon or each metallized thread (22), respectively, is provided additionally to the supporting ribbons or threads (20, 21) of the plant net (2).

10. The plant net of claim 8 or 9, **characterized in that** each metal wire, each metal thread, each metallized ribbon or each metallized thread (22), respectively, is knitted into the plant net (2) as a weft thread or in parallel to a weft thread (21).

## Revendications

1. Procédé de reprise de filets de plantation allongés, recouverts de terre, les filets de plantation étant repris avec une machine de ramassage et étant soulevés de la terre, **caractérisé en ce que** la machine de ramassage (7 à 15) est orientée en fonction du signal d'au moins un détecteur de métal (16) par rapport aux filets de plantation (1, 2) recouverts de terre, chaque détecteur de métal (16) réagissant à une partie métallique des filets de plantation.

2. Procédé selon la revendication 1, **caractérisé en ce que** chaque détecteur de métal (16) réagit aux propriétés magnétiques et/ou électriques de la partie métallique.

3. Procédé selon la revendication 2, **caractérisé en ce que** chaque détecteur de métal (6) réagit aux ondes électromagnétiques émises par la partie métallique.

4. Procédé selon la revendication 1, 2 ou 3, **caractérisé en ce que** chaque détecteur de métal (16) réagit aux propriétés de réflexion des ultrasons de la partie métallique.

5. Filet de plantation destiné à être recouvert de terre et repris par un procédé selon l'une des revendications 1 à 4, **caractérisé en ce que** le filet de plantation comporte une partie métallique qui est concentrée dans une ou plusieurs zones (17 à 19) du filet de plantation (2), chaque zone (17 à 19) dans laquelle est concentrée la partie métallique, s'étendant parallèlement à la direction principale d'étendue du filet de plantation (2) et présentant une largeur réduite par rapport au filet de plantation, transversalement à la direction principale d'étendue du filet de plantation.

6. Filet de plantation selon la revendication 5, **caractérisé en ce qu**'une zone (18) est disposée autour du plan médian longitudinal du filet de plantation (2).

7. Filet de plantation selon la revendication 5 ou 6, **caractérisé en ce qu**'une zone (17, 19) est disposée sur un bord latéral du filet de plantation (2).

8. Filet de plantation selon l'une des revendications 5 à 7, **caractérisé en ce que** la partie métallique du filet de plantation (2) est prévue sous la forme d'au moins un fil métallique ou d'un filament métallique ou d'une bande métallisée ou d'un fil (22).

9. Filet de plantation selon la revendication 8, **caractérisé en ce que** chaque fil métallique, chaque filament métallique, chaque bande métallisée, respectivement chaque fil métallisé (22) est prévu en supplément aux bandes ou fils (20, 21) porteurs du filet de plantation (2).

10. Filet de plantation selon la revendication 8 ou 9, **caractérisé en ce que** chaque fil métallique, chaque filament métallique, chaque bande métallisée, respectivement chaque fil métallisé (22) est incorporé au filet de plantation en tant que fil de trame ou parallèlement à un fil de trame (21).
